# EUROPÄISCHE PATENTANMELDUNG

(11) **EP 2 226 617 A2**
(43) Veröffentlichungstag der Anmeldung: **08.09.2010**
(21) Anmeldenummer: 10001741.7
(22) Anmeldetag: 20.02.2010
(51) Int. Cl.: G01K 1/12, G01K 1/16, G01K 13/00

(54) **Temperaturfühler für einen Zylinderkopf eines Motors**

(30) Priorität: 04.03.2009 DE 102009011750
(71) Anmelder: BorgWarner BERU Systems GmbH, 71636 Ludwigsburg (DE)
(72) Erfinder: Marto, Arno, 71263 Weil der Stadt (DE); Lehmann, Heiner, 71636 Ludwigsburg (DE); List, Gerald, 71701 Schwieberdingen (DE)
(74) Vertreter: Twelmeier Mommer & Partner

(57) **Zusammenfassung**

Beschrieben wird ein Temperaturfühler für einen Zylinderkopf, mit einem elektrischen Messwiderstand (1), einem den Messwiderstand (1) umgebenden Schutzrohr (2), welches eine geschlossene Spitze und ein hinteres Ende mit einem Zugang zum Innenraum des Schutzrohrs (2) hat, und einem Gehäuse (3), aus dem das Schutzrohr (2) mit seiner geschlossenen Spitze herausragt und das an seiner Außenseite ein Gewinde (4) aufweist. Erfindungsgemäß ist vorgesehen, dass das Schutzrohr (2) in dem Gehäuse (3) federnd gelagert ist.

## Beschreibung

Die Erfindung geht aus von einem Temperaturfühler mit den im Oberbegriff des Anspruchs 1 angegebenen Merkmalen. Ein derartiger Temperaturfühler hat einen elektrischen Messwiderstand, ein den Messwiderstand umgebendes Schutzrohr, welches eine geschlossene Spitze und ein hinteres Ende mit einem Zugang zum Innenraum des Schutzrohrs hat, und ein Gehäuse, aus dem das Schutzrohr mit seiner geschlossenen Spitze herausragt und das an seiner Außenseite ein Gewinde zum Einschrauben in einen Zylinderkopf aufweist.

Aufgabe der Erfindung ist es einen Weg aufzuzeigen, wie kostengünstig die Temperatur eines Zylinderkopfs eines Motors zuverlässig gemessen werden kann.

Diese Aufgabe wird durch einen Temperaturfühler mit den im Anspruch 1 angegebenen Merkmalen gelöst. Vorteilhafte Weiterbildungen der Erfindung sind Gegenstand von Unteransprüchen.

Bei einem erfindungsgemäßen Temperaturfühler ist das Schutzrohr in dem Gehäuse federnd gelagert. Das Schutzrohr kann sich deshalb in seiner Längsrichtung gegenüber dem Gehäuse verschieben. Vorteilhaft kann auf diese Weise zuverlässig erreicht werden, dass die Spitze des Schutzrohrs mit dem darin angeordneten Messwiderstand stets Kontakt zu einer Stelle des Zylinderkopfs hat, deren Temperatur gemessen werden soll.

Ein erfindungsgemäßer Temperaturfühler ist wegen dieses Kontakts thermisch besser an den Zylinderkopf angekoppelt und kann folglich dessen Temperatur rascher mit einer größeren Genauigkeit bestimmen. Durch die federnde Beweglichkeit des Schutzrohrs gegenüber dem Gehäuse können insbesondere auch die Effekte unterschiedlicher Wärmeausdehnung, Fertigungstoleranzen und ähnliches ausgeglichen werden, so dass im Betrieb das Schutzrohr des Temperaturfühlers praktisch stets Kontakt mit einer vorgesehenen Anschlagstelle des Zylinderkopfs hat.

Weitere Einzelheiten und Vorteile der Erfindung werden an einem Ausführungsbeispiel unter Bezugnahme auf die beigefügte Zeichnungen erläutert. Es zeigt:

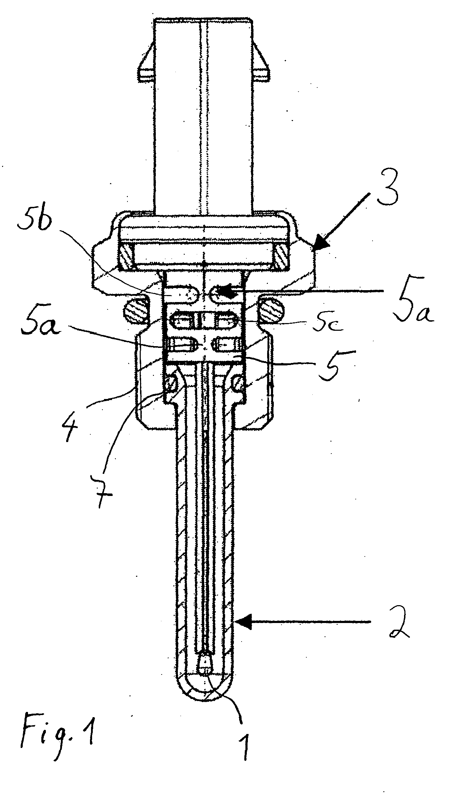

- Figur 1: eine Schnittansicht eines Ausführungsbeispiels eines erfindungsgemäßen Temperaturfühlers.

Der in Figur 1 dargestellte Temperaturfühler hat einen elektrischen Messwiderstand 1, ein den Messwiderstand 1 umgebendes Schutzrohr 2, welches eine geschlossene Spitze und ein hinteres Ende mit einem Zugang zum Innenraum des Schutzrohrs 2 hat, und ein Gehäuse 3, aus dem das Schutzrohr 2 mit seiner geschlossenen Spitze herausragt. Das Gehäuse 3 hat an seiner Außenseite ein Gewinde 4 zum Einschrauben in einen Zylinderkopf eines Motors.

Das Schutzrohr 2 ist in dem Gehäuse 3 federnd gelagert, indem es sich auf einem federnden Träger 5 abstützt. Der federnde Träger 5 enthält ein oder mehrere Federelemente 5a, die bei dem dargestellten Ausführungsbeispiel einstückig mit dem Träger 5 ausgebildet sind, nämlich als Engstellen in einem Kunststoffblock.

Geeignete polymere Materialien für den Träger 5 und die Federelemente 5a sind beispielsweise Perfluorelastomere. Der Träger 5 ist bevorzugt ein zylindrischer Kunststoffblock, dessen Federhärte durch Aussparungen 5b, 5c auf ein gewünschtes Maß reduziert werden kann. Besonders bevorzugt sind umlaufend ausgebildete Aussparungen 5b und Aussparungen in Form von durch den Träger 5 hindurchgehenden Löchern 5c vorhanden, insbesondere senkrecht zur Längsrichtung des Schutzrohrs 2 hindurchgehende Löcher 5c, die insbesondere flach ausgebildet sein können, also die Form von Langlöchern haben können.

Der Messwiderstand 1 kann beispielsweise ein keramischer Widerstand, insbesondere ein NTC, sein. Bevorzugt ist der Messwiderstand 1 aber ein metallischer Widerstand, beispielsweise aus Platin oder einer Platinlegierung. Der Widerstand 1 kann dabei wie bei dem dargestellten Ausführungsbeispiel einen keramischen Träger haben, beispielsweise ein Trägerplättchen.

Die zu dem Messwiderstand 1 führenden Zuleitungen können in dem Schutzrohr 2 von einem Rohr umgeben sein. Möglich ist es auch Anschlussdrähte des Widerstands 1 in Führungen, beispielsweise Nuten, eines geeigneten Körpers anzuordnen. Diese kann ebenso wie ein entsprechendes Rohr aus Kunststoff sein und einstückig mit dem Träger 5 hergestellt werden. Bei dem gezeigten Ausführungsbeispiel ragt der Träger 5 in das Schutzrohr 2 hinein und hält die Zuleitungen des Messwiderstands 1, beispielsweise in Nuten oder Kanälen.

Der Messwiderstand 1 kann in dem Schutzrohr 2 von einem elektrisch isolierenden Kunststoff umgeben sein. Als Füllstoff kann eine Wärmeleitpaste verwendet werden. Alternativ können als Füllstoffe auch Pulver verwendet werden. Geeignet sind insbesondere Keramikpulver wie Aluminiumoxid, Aluminiumnitrid, Polysilikate und ähnliches.

Zwischen dem Schutzrohr 2 und dem Gehäuse 3 ist bei dem dargestellten Ausführungsbeispiel ein O-Ring angeordnet. Das Schutzrohr 2 weist hierfür eine Nut auf, in welcher der O-Ring sitzt. Das Schutzrohr 2 wird in dem Gehäuse 3 formschlüssig gehalten, indem das Schutzrohr 2 an seinem offenen Ende verdickt ist.

### Bezugszahlen

- 1: Messwiderstand
- 2: Schutzrohr
- 3: Gehäuse
- 4: Gewinde
- 5: Träger
- 5a: Federelement
- 5b, 5c: Aussparung
- 7: O-Ring

## Patentansprüche

1. Temperaturfühler für einen Zylinderkopf, mit
einem elektrischen Messwiderstand (1),
einem den Messwiderstand (1) umgebenden Schutzrohr (2), welches eine geschlossene Spitze und ein hinteres Ende mit einem Zugang zum Innenraum des Schutzrohrs (2) hat, und
einem Gehäuse (3), aus dem das Schutzrohr (2) mit seiner geschlossenen Spitze herausragt und das an seiner Außenseite ein Gewinde (4) aufweist,
**dadurch gekennzeichnet, dass**
das Schutzrohr (2) in dem Gehäuse (3) federnd gelagert ist.

2. Temperaturfühler nach Anspruch 1 **dadurch gekennzeichnet, dass** sich das Schutzrohr (2) in dem Gehäuse (3) auf einem federnden Träger (5) abstützt.

3. Temperaturfühler nach Anspruch 2 **dadurch gekennzeichnet, dass** der Träger (5) ein Federelement (5a) enthält.

4. Temperaturfühler nach Anspruch 3, **dadurch gekennzeichnet, dass** der Träger (5) einstückig mit dem Federelement (5a) ausgebildet ist.

5. Temperaturfühler nach Anspruch 3 oder 4, **dadurch gekennzeichnet, dass** das Federelement (5a) aus einem polymeren Material ist.

6. Temperaturfühler nach einem der Ansprüche 3 bis 5, **dadurch gekennzeichnet, dass** der Träger (5) ein Kunststoffkörper ist.

7. Temperaturfühler nach Anspruch 6, **dadurch gekennzeichnet, dass** der Kunststoffkörper in einer sich in Längsrichtung des Schutzrohres (2) erstreckenden Seitenfläche mindestens eine Aussparung (5b, 5c) aufweist.

8. Temperaturfühler nach Anspruch 7, **dadurch gekennzeichnet, dass** der Kunststoffkörper mindestens eine umlaufende Aussparung (5b) aufweist.

9. Temperaturfühler nach Anspruch 7 oder 8, **dadurch gekennzeichnet, dass** der Kunststoffkörper mindestens eine Aussparung in Form eines durchgehenden Loches (5c) aufweist.

10. Temperaturfühler nach einem der vorstehenden Ansprüche **dadurch gekennzeichnet, dass** zwischen dem Schutzrohr (2) und dem Gehäuse (3) eine Dichtung angeordnet ist.

11. Temperaturfühler nach Anspruch 10, **dadurch gekennzeichnet, dass** die Dichtung ein O-Ring (7) ist.

12. Temperaturfühler nach einem der vorstehenden Ansprüche, **dadurch gekennzeichnet, dass** der Messwiderstand (1) ein metallischer Widerstand mit einem keramischen Träger ist.

13. Temperaturfühler nach einem der vorstehenden Ansprüche, **dadurch gekennzeichnet, dass** der Träger (5) in das Schutzrohr (2) hineinragt.

14. Temperaturfühler nach Anspruch 13, **dadurch gekennzeichnet, dass** der Träger (5) in dem Schutzrohr (2) die Zuleitungen des Messwiderstands (1) hält.
